(19) Europäisches Patentamt
European Patent Office
Office européen des brevets

(11) EP 1 843 668 B1

(12) **EUROPEAN PATENT SPECIFICATION**

(45) Date of publication and mention of the grant of the patent:
**30.12.2009 Bulletin 2009/53**

(21) Application number: **06706350.3**

(22) Date of filing: **23.01.2006**

(51) Int Cl.:
***A23L 1/30*** *(2006.01)* *A23D 9/05* *(2006.01)*

(86) International application number:
**PCT/EP2006/000543**

(87) International publication number:
**WO 2006/081958 (10.08.2006 Gazette 2006/32)**

# (54) POWDER COMPOSITIONS

PULVERZUSAMMENSETZUNGEN

COMPOSITIONS EN POUDRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.02.2005 EP 05002125**

(43) Date of publication of application:
**17.10.2007 Bulletin 2007/42**

(73) Proprietor: **DSM IP Assets B.V.**
**6411 TE Heerlen (NL)**

(72) Inventors:
- **FELTES, Karin**
  **79650 Schopfheim (DE)**
- **KLEEMANN, Nicolle**
  **79774 Albbruck (DE)**
- **LEUENBERGER, Bruno**
  **CH-4123 Allschwil (CH)**
- **SCHWEIKERT, Loni**
  **CH-4315 Zuzgen (CH)**
- **ULM, Johann**
  **CH-4104 Oberwil (CH)**

(74) Representative: **Mezger, Wolfgang et al**
**DSM Nutritional Products Ltd.,**
**Wurmisweg 576**
**4303 Kaiseraugst (CH)**

(56) References cited:
**EP-A- 0 972 513** **EP-A- 1 066 761**

Remarks:
The file contains technical information submitted after the application was filed and not included in this specification

EP 1 843 668 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to powder compositions comprising a LC-PUFA (long chain poly-unsaturated fatty acid), to a process for the manufacture thereof and to the use of such compositions in the preparation of food with increased nutritional value. More precisely, the present invention provides powder compositions comprising PUFAs, especially from marine oils, which PUFAs are embedded in a matrix of a modified starch, which compositions provide at the same time an excellent sensory profile, a fine particle structure and a high oil loading.

During the last years marine oils have attracted substantial interest as a source of long chain polyunsaturated fatty acids which have gained increased importance as dietary supplements. Today there is reasonable evidence that increasing dietary levels of PUFAs have beneficial effects on health and can reduce the incidence of death from coronary heart diseases via effects on blood pressure, atherosclerosis, and thrombogenesis.

PUFAs are classified according to the position of the double bonds in the carbon chain of the molecule as n-9, n-6 or n-3 PLTFAs. Examples of n-6 PUFAs are linoleic acid (C18 : 2), arachidonic acid (ARA, C20 : 4), γ-linolemic acid (GLA, C18 : 13) and dihomo-γ -linolenic acid (DGLA, C20 : 3). Examples of n-3 PUFAs are α-linolenic acid (C18 : 13), eicosapentaenoic acid (EPA, C20 : 5), and docosahexaenoic acid (DHA, C22 : 6).

Especially EPA and DHA have attracted interest of the food industry in recent years. The most available sources of these two fatty acids are fish and the marine oils extracted from them.

With increasing number of double bonds the PUFAs are subject to increasing oxidative degradation and development of undesirable "off-flavors", mainly fishy smell and taste. The increasing interest in the PUFAs, such as EPA and DHA, has prompted research in methods of refining and stabilization of fish oils and concentrates of PUFAs.

It has been known for a long time that freshly refined marine oils are initially free from off-flavours and a taste and smell of fish but that reversion through oxidation occurs rapidly. Many attempts have been made to stabilize the oils, e.g., by the addition of different antioxidants or mixtures thereof. However, most attempts have failed so far or at least left open the possibility of further improvements. Until today, there is a need to develop compositions on the basis of PUFAs or marine oils containing them which have good sensory properties over a long time and can therefore be used as dietary supplements, e.g., in the form of dry, free-flowing powders or beadlets. Several stabilized PUFA oils and microencapsulated powders are on the market and do indeed show sensory improvements over the non-stabilized oils. However, the sensory issues of PUFAs are still one of the most limiting factors in their application and use in food stuff, especially if at the same time a fine particle structure of the PUFA composition and a high PUFA content thereof is desired.

According to US Patent 4670247 fat soluble beadlets are prepared by emulsifying fat soluble substances such as polyunsaturated fatty acids with water, gelatin and a sugar and further converting said emulsion to droplets, collecting the droplets in a collecting powder to form particles, separating the particles, from the collecting powder and heat treating the resulting product to form a water insoluble beadlet. The sugar is a reducing sugar and can be selected from the group consisting of fructose, glucose, lactose, maltose, xylose and mixtures thereof. The collecting powder used according to US Patent 4670247 is a starchy powder. The heat treatment results in crosslinking of the gelatin matrix. According to conventional heating methods the crosslinking step is performed by heating on pre-heated stainless steel trays in an electric oven at a temperature of from about 90°C for 2 hours to about 180°C for less than a minute.

According to USP 6,444,227 beadlets containing fat soluble substances, e.g., PUFAs, are obtained by (a) forming an aqueous emulsion of the substance, a gelatine, a reducing sugar and, optionally an antioxydant and/or a humectant, (b) optionally adding a crosslinking enzyme, (c) converting the emulsion into a dry powder and (d) crosslinking the gelatine matrix in the coated particles by radiation or by incubating (in case of an enzyme being present).

EP 0 972 513 Al discloses a process for the preparation of emulsified powders which comprises emulsifying an oil-soluble substance (which may be a PUFA such as DHA or EPA) and a chemically modified starch (which is preferably octenyl succinate starch) in water and drying the emulsion thus formed. Since nothing in this document is mentioned regarding the surface oil content of the powder particles the present inventors have determined the surface oil content of the powder compositions obtained according to Examples 2 and 5 thereof. It has been found that the surface oil content by weight of these powder particles is more than twenty-fold compared with the surface oil content of the powder compositions of the present invention.

It has now been found that powder compositions having particle average diameters of about 50 to 500 microns (μm) preferably of about 50 to 200 microns, most preferably of about 70 to 120 microns, which comprise LC-PUFAs embedded in a matrix of a modified starch can be prepared easily, have low surface oil content, excellent sensory properties and a high stability at high LC-PUFA loadings relative to their fine particle structure. These powder compositions can, therefore, be used excellently as such or in the form of premixes as additives to food, especially food which itself is of fine structure.

Therefore, the present invention relates to a powder composition having particle average diameters of about 50 to 500 microns (μm) preferably of about 50 to 200 microns, most preferably of about 70 to 120 microns, which comprises droplets containing at least one long chain polyunsaturated fatty acid (LC-PUFA) embedded in a matrix of a

modified starch and wherein the particles are characterized by a surface oil content of less than 0.5% (w/w), preferably 0.2% (w/w) or below.

The invention also relates to methods for the manufacture of such compositions, to the use of such compositions, if desired in combination with other ingredients, as food additives or for the preparation of food with increased nutritional value and to food or food ingredients to which such compositions have been added.

The term "PUFA" or "LC-PUFA" is used in the present specification and claims in the sense generally known to the person skilled in the art and relates to polyunsaturated fatty acids individually or as mixtures, prepared synthetically or isolated, concentrated and/or purified from natural sources, in the form of the free acids, their salts, mono-, di- or triglycerides or other esters, e.g., ethyl esters, obtainable, e.g., from glycerides by transesterification.

The term PUFA, therefore, comprises, but is not restricted to, those compounds mentioned above as well as oils containing them. PUFAs of preferred interest in the context of the present invention are n-3 and n-6 PUFAs, espec. EPA, DPA, DHA, GLA and ARA and oils containing them, preferably of food-grade quality, separately or in mixtures, preferably in the form of their triglycerides, especially as components of oil obtained from marine animals, preferably from fish or from plants, e.g., flax, rape, borage or evening primrose, or by fermentation. They can be stabilized and/or deodorized by methods known in the art, e.g., by addition of antioxidants, emulsifiers, spices or herbs, such as rosemary or sage extracts. In a preferred embodiment of the present invention the term PUFA refers to refined fish oils commercially available and known under the trade mark RGPUFA®. In a further preferred embodiment of the present invention the ROPUFA® has been stabilized with tocopherols or tocotrienols (natural mixtures or synthetically prepared, preferably α-tocopherol), if desired together with other antioxidants and/or deodorants, such as ascorbyl palmitate and/or rosemary extract.

The powder compositions of the present invention are made up of particles of PUFAs embedded in a matrix of a modified starch. These particles are of relatively small sizes, viz. with average diameters in the range of about 50 to 500 microns, preferably of about 50 to 200 microns, more preferably of about 50 to 120 microns. The particle size can be measured by any method well-known in the art, e.g., by laser diffraction, using well-known, available equipment (e.g., MALVERN Mastersizer 2000). The amount of the PUFA-containing phase on the surface of the powder (the "surface oil") is less than 0.5% (w/w) and preferably in the range of 0.2% (w/w) or below. Surface oil is defined as the amount of oily phase in percent of the powder weight which can be washed away with an appropriate solvent, i.e. an organic solvent, e.g., cyclohexane. A low surface oil content is an important quality parameter for the sensory performance of the PUFA powders. Normally, surface oil content is inversely correlated with powder particle size. Surprisingly, the surface oil in the powders of the present invention is lower than expected from the particle size, even without an additional washing step.

The amount of PUFA or PUFAs in the powder compositions of the present invention can vary within a wide range and will generally depend on its final use. It can vary from about 5 to about 55 percent by weight, preferably from about 5 to about 25 percent and more preferably from about 7.5 to about 20 percent by weight of the dry powder.

Modified starches are well known materials which are available commercially, or may be prepared by a skilled person using conventional methods. Starches are hydrophilic and therefore do not have emulsifying capacities However, modified starches are made from starches substituted by known chemical methods with hydrophobic moieties. For example starch may be treated with cyclic dicarboxylic acid anhydrides such as succinic anhydrides, substituted with a hydrocarbon chain (see Modified Starches: Properties and Uses, ed. O.B.Wurzburg, CRC Press, Inc., Boca Raton, Florida (1991)). A particularly preferred modified starch of this invention has the following structure

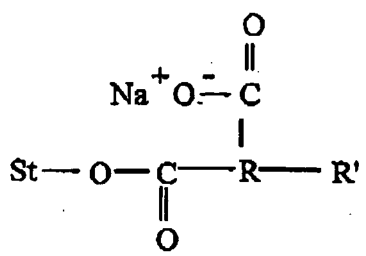

I

wherein St is a starch, R is an alkylene group and R' is a hydrophobic group.

Preferably the alkylene group is a lower alkylene group, such as dimethylene or trimethylene. R' may be an alkyl or alkenyl group, preferably $C_5$ to $C_{18}$. A preferred compound of Formula I is starch sodium octenyl succinate. It is available commercially from, among other sources, National Starch and Chemical Company, Bridgewater, N.J., as Capsul®. Making this compound, and compounds of Formula I in general, is known in the art (see Modified Starches: Properties and Uses, ed. O.B.Wurzburg, CRC Press, Inc., Boca Raton, Florida (1991)).

The powder compositions of the present inventions can be manufactured by processes comprising steps, each of which is well-known in the art, using commercially available equipments. In a preferred embodiment the compositions are prepared by a process which comprises

(a) preparing an aqueous solution of a modified starch solution
(b) emulsifying a PUFA in this solution to yield an emulsion with a desired oil droplet size,
(c) drying the emulsion to yield a powder with an average diameter of the droplets of about 50 to 500 microns and
(d) optionally removing residual surface oil by an appropriate method.

The Example given below describes a specific procedure. However, all parameters are not critical. They can be varied within broad limits well-known to a person skilled in the art and can be adapted to, e.g., the preparation of larger amounts of powder compositions.

Step (a) can be done at any reasonable temperature (normally below 100°C, preferably at 70-80°C) to ensure a rapid dissolution of the modified starch in water in a reasonable time interval by shaking or stirring, e.g., with a disc micer. Step (a) should preferably include co-solution of an appropriate antioxidant, such as sodium ascorbate, and/or a low molecular carbohydrate as stabilizing agent, such as saccharose.

In order to attain the desired oil droplet size, the emulsifying step (b) is effected under continuous stirring at a convenient speed and under pressure, if preferable, in one or several passages. The time period for one passage is not critical and will depend on system parameters including emulsion viscosity, batch size, flow rate and pressure and may be varied by the skilled person to obtain the desired result. The emulsifying step should continue until testing shows that the desired droplet size is achieved. The homogenization temperature is preferably below 70°C.

In accordance with step (c) the emulsion is then converted to a powder by a known technology such as spray-drying, freeze-drying, fluid-bed drying, beadlet formation, but preferably by spray-drying which provides best results regarding surface oil content. The process parameters are selected by the person skilled in the art to yield a powder composition of a PUFA embedded in a matrix of a starch wherein the powder particles have the desired average diameter and surface oil content. In case of spray-drying normally an inlet temperature in the range of 130 to 220°C, preferably below 200°C, an outlet temperature below 100°C, preferably of 80 to 90°C, if desired under an inert atmosphere.

Should one desire to reduce the already low surface oil content even more or to remove still remaining surface oil completely one can add a further step (d), represented by any appropriate method known in the art, e.g., by washing the dried or nearly dry powder with an oil solving solvent or solvent mixture, e.g., cyclohexane, and drying until the solvent is eliminated completely.

To improve flowability of the powder, if desired, materials suitable therefore known to the person skilled in the art, e.g. silicic acid, can be used. The droplets can also be coated with different materials, if desired, e.g. in a fluid bed.

The powder compositions of the present invention can be added to or be used in the manufacture of food or food ingredients in a manner known per se to increase the nutritional value thereof. They can be added to or be used in the manufacture of food of nearly any kind, viz. to human and animal food, and be added at any suitable time during the process of the manufacture, i.e., to the starting ingredients, the nearly end product or somewhere in between, as powder or in form of a solution/emulsion, preferably in a way to achieve an even distribution. Food for human consumption is preferred and comprises food for adult persons as well as for children and babies. Due to their fine powder structure the compositions of the present invention are added to food and food ingredients of fine powder structure themselves to increase their nutritional value such as milk and chocolate powders, flours and flour mixes, e.g., for bread, cakes and pastries or complete baking mixtures, pudding powders, etc. They are especially useful in the preparation and fortification of dietetic products. Last but not least they can be added to beverages and beverage concentrates of all kinds, e.g., dairy products, milk drinks, yoghurts, fruit and vegetable juices and concentrates therefore, syrups, mineral waters and alcoholic drinks.

The food or food ingredients to which the compositions of the present invention have been added and the nutritional values of which have thereby been increased are also an aspect of the present invention.

Again the amounts of the powder compositions in weight percent to be added to the food or its ingredients can vary within broad ranges and will be dependent on the one hand on the type of food and their potency on the other hand, i.e. the PUPA content of the composition. The amounts should reflect recommendations of dieticans to fulfil the needs of the respective individuals.

The invention is illustrated by but not restricted to the following Examples.

## Example 1

178 g of starch sodium octenyl succinate, a modified food starch (Capsul ®), 80 g of saccharose and 18 g of sodium ascorbate (as antioxidant in the water phase) were placed in a 1000 ml double wall vessel. 150 ml of de-ionized water were added and the mixture was brought into solution while stirring with a micer disc at 500 revolutions/minute

(rpm) at approx. 75°C. This solution is called matrix. Thereupon, 120 g of ROPUFA® '30' n-3 Food Oil (a refined fish oil blend with minimum 30% n-3 PUFAs [at least 25% DHA, EPA and DPA] in form of triglycerides stabilized with α-tocopherol, ascorbyl palmitate and rosemary extract) were emulsified in this matrix and stirred for 10 minutes. During the emulsification and stirring the micer disc was operated at 4800 rpm. After this emulsification the internal phase of the emulsion had an average particle size of 200 nm (measured by laser diffraction). The emulsion was diluted with 100 g de-ionized water to adjust the viscosity and the temperature was held at 50°C.

The emulsion was spray dried on a lab spray dryer (Mobilie Minor ™ 2000 Typ D1 from Niro) under the following conditions:

Inlet temperature: approx. 200°C; outlet temperature: 83 - 89°C; air pressure: 4 bar; spray rate: approx 2.6 kg/hour. Yield: 341 g dry powder. To improve the flowability the final product was blended with 1% silicic acid.

A white to slightly yellowish, fine powder was received with a DHA/EPA/DPA content of 12.1% (DHA: 5.9%; EPA: 5.4 and DPA: 0.8%), a residual moisture content of 1.8%, a peroxide value of 1.2 mEq/kg and a surface oil content of 0.2% ± 0.1%.

Determination of surface oil content:

Weigh exactly an amount of approximately 5 g of sample and place it in a 50 ml graduated centrifuge tube. Dilute it to 40 milliliters with cyclohexane. Shake the sample and cyclohexane for 3 minutes. Filter the mixture through a Whatman No. 40 filter paper to remove all the solids. A 50 ml round bottom flask must be dried in an oven for 1 hour at 105°C and placed in a desiccator until it reaches room temperature. The round bottom flask is weighed accurately to three decimal places. Using a 25 ml pipette, extract 25 ml of the filtrate and transfer it to a clean and tared 50 ml round bottom flask.

Place the round bottom flask with the sample on a rotary evaporator and evaporate to dryness. After the cyclohexane is removed, place the round bottom flask with the remaining oil in an oven at 105°C for 1 hour. Remove the round bottom flask from the oven and place it in a desiccator. Allow the round bottom flask to cool to room temperature before weighing. Weigh the round bottom flask to determine the amount of oil extracted.

Calculation:

$$\frac{\text{wt of oil extracted in gm} \times 40\text{ ml} \times 100}{\text{wt of sample in gm} \times 25\text{ ml}} = \%\ \text{Surface Oil}$$

## Example 2

An emulsion can be prepared in an analogous manner to Example 1. ROPUFA® '30' n-3 INF Oil, a refined fish oil with minimum 27% (w/w) total of n-3 PUFAs (at least 21%, w/w, DHA) in form of triglycerides, stabilized with dl-α-tocopherol, is used in place of ROPLTFA® '30' n-3 Food Oil.

The emulsion is spray dried as described in Example 1.

The DHA content of such a product is approximately 6.3% (w/w), the total n-3 PUFA content 8.1 % (w/w).

## Example 3

An emulsion can be prepared in an analogous manner to Example 1. ROPUFA® '30' n-3 EPA Oil, a refined fish oil with minimum 27% (w/w) total n-3 PUFAs (at least 13.5%, w/w, EPA and 8%, w/w, DHA) in form of triglycerides, stabilized with dl-α-tocopherol, ascorbyl palmitate and lecithin, is used in place of ROPUFA® '30' n-3 Food Oil.

The emulsion is spray dried as described in Example 1.

The EPA content of such a product is approximately 4.0% (w/w), the total n-3 PUFA content 8.1% (w/w).

**Example 4**

An emulsion can be prepared in an analogous manner to Example 1. ROPUFA® '75' n-3 EE Oil, refined ethyl esters of fish oil, with minimum 72% (weight as ethyl esters) total n-3 PUFAs (at least 38%, w/w, EPA and 20%, w/w, DHA) in form of triglycerides, stabilized with rosemary extract, ascorbyl palmitate, mixed tocopherols and citric acid, is used in place of ROPUFA® '30'n-3 Food Oil.
The emulsion is spray dried as described in Example 1.
The EPA content of such a product is approximately 11.4% (w/w), DHA approximately 6.0% (w/w) and the total n-3 PUFA content 21.6% (w/w).

**Example 5**

An emulsion can be prepared in an analogous manner to Example 1. ROPUFA® '10' n-6 Oil, a refined evening primrose oil, with minimum 9% γ-linolenic acid in form of triglycerides, stabilized with dl-α-tocopherol and ascorbyl palmitate, is used in place of ROPUFA® '30' n-3 Food Oil.
The emulsion is spray dried as described in Example 1.
The γ-linolenic acid content of such a product is approximately 2.7% (w/w).

**Example 6**

An emulsion can be prepared in an analogous manner to Example 1. ROPLIFA® '25' n-6 Oil, a refined borage oil with minimum 23% γ-linolenic acid in form of triglycerides, stabilized with dl-α-tocopherol and ascorbyl palmitate, is used in place of ROPUFA® '30' n-3 Food Oil.
The emulsion is spray dried as described in Example 1.
The γ-linolenic acid content of such a product is approximately 6.9% (w/w).

**Example 7**

An emulsion can be prepared in an analogous manner to Example 1. A refined microbial arachidonic acid (ARA) oil with minimum 40% (w/w) ARA content in form of triglycerides, stabilized with mixed tocopherols, is used in place of ROPLTFA® '30' n-3 Food Oil.
The emulsion is spray dried as described in Example 1.
The arachidonic acid content of such a product is approximately 12.0% (w/w).

**Example 8**

An emulsion can be prepared in an analogous manner to Example 1. A refined olive oil with minimum 75% n-9 (C18:1) content in form of triglycerides is used in place of ROPUFA® '30' n-3 Food Oil.
The emulsion is spray dried as described in Example 1.
The oleic acid content of such a product is approximately 22.5%.

**Application Examples**

(1) **Chocolate milk (enrichment level: 0.2% PUFA dry powder)**

15 g of cacao powder, 35 g of sugar and 1.1 g of PUFA dry powder according to Example 1 were mixed thoroughly and dissolved in 500 ml of milk. The chocolate milk was tested in a sensory test (see below) and compared to a reference sample without PUFA. After storage of the PUFA dry powder for 3, 6, 9 and 12 months the sensory test in freshly produced chocolate milk was repeated. No significant sensory difference could be observed to a reference sample without PUFA, and no fishy taste or smell was detectable after 12 months.

(2) **Pudding (enrichment level: 0.4% PUFA dry powder)**

121.25 g of sugar, 19.35 g corn starch (Ultra-Tex 2, National Starch), 3.45 g of gelifying agent (Flanogen ADG56, Degussa), 0.75 g of flavour powder vanilla (Vanilla Flavour 750 16-32, Givaudan-Roure Flavours), 0.6 g of Beta-Carotene 1% CWS (DSM Nutritional Products) and 4.60 g of PUFA dry powder according to Example 1 were thoroughly mixed in an appropriate mixer for 10 minutes. 150 g of the instant pudding powder were added to 1 litre of cold milk and mixed. The solution was heated and kept boiling for 1 minute under constant stirring. The hot pudding was

filled into dishes. The vanilla pudding was cooled down for 1 hour before storing at 5°C. The sample was tested in a sensory test (see below) and compared to a reference sample without PUFA. After storage of the PUFA dry powder for 3, 6, 9 and 12 months the sensory test in freshly produced pudding was repeated. No significant sensory difference could be observed to a reference sample without PUFA, and no fishy taste or smell was detectable after 12 months.

(3) **Bread (enrichment level: 1% PUFA dry powder)**

50 g of yeast were dissolved in 200 g of water. 1000 g of wheat flour (Type 500), 480 g of water, 20 g of salt, the yeast solution and 16 g of PUFA dry powder according to Example 1 were mixed together to form a dough. After proofing the dough was reworked, divided and formed to a loaf. Before baking the surface of the loaf was brushed with water. The sample was tested in a sensory test (see below) and compared to a reference sample without PUFA. After storage of the PUFA dry powder for 3, 6, 9 and 12 months the sensory test in freshly produced bread was repeated. No significant sensory difference could be observed to a reference sample without PUFA, and no fishy taste or smell was detectable after 12 months.

**(4) Whole milk (enrichment level: 0,3% PLTFA dry powder)**

65 g of whole milk powder and 1.5 g of PUFA dry powder according to Example 1 were mixed and dissolved in 500 ml of water. The sample was tested in a sensory test (see below) and compared to a reference sample without PUMA. After storage of the PUFA dry powder for 3, 6, 9 and 12 months the sensory test in freshly produced enriched whole milk was repeated. No significant sensory difference could be observed to a reference sample without PUFA, and no fishy taste or smell was detectable after 12 months.

Sensory profile test

All samples were evaluated by a trained taste panel. The sensory analysis was performed by means of descriptive analysis by using interval scales in terms of fishiness. The interval scale consists of 7 intervals, starting with 1 for fishiness not detectable up to 7 for extremely fishy. An analysis of variance (ANOVA) was carried out to see if there is a significant difference. Multiple comparisons were made with the least significant difference test (L.S.D.) at 5% level of significance.

**Claims**

1. A powder composition having particle average diameters of about 50 to 500 microns which comprises droplets containing at least one long chain (LC) polyunsaturated fatty acid (PUFA) embedded in a matrix of a starch which has been modified with hydrophobic moieties and wherein the particles are **characterized by** a surface oil content of less than 0.5% (w/w).

2. A composition according to claim 1 wherein the particles have an average diameter of about 50 to 150 microns.

3. A composition according to claim 1 or claim 2 wherein the modified starch is of formula

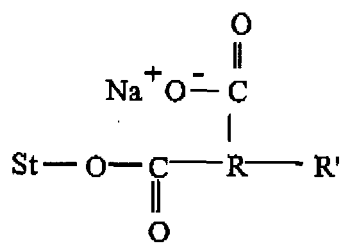

I

wherein St is a starch, R is an alkylene group and R' is a hydrophobic group.

4. A composition according to anyone of claims 1 to 3 wherein the modified starch is starch sodium octenyl succinate.

5. A composition according to anyone of claims 1 to 4 wherein the LC-PUFA is of n-3 and/or n-6 type.

6. A composition according to claim 5 wherein the LC-PUFA is a mixture of EPA, DPA and DHA in the form of their triglycerides.

7. A composition according to claim 6 wherein the LC-PUFA mixture is in the form of concentrates obtained from marine oils.

8. A composition according to any one of claims 5 to 7 wherein the LC-PUFA is in stabilized and/or deodorized form.

9. A composition according to any one of claims 5 to 8 wherein the LC-PUFA is stabilized with α-tocopherol.

10. A composition according to claim 9, wherein the LC-PUFA is stabilized with α-tocopherol or a mixture of tocopherols together with other antioxidants and/or deodorants.

11. A method of increasing the nutritional value of a food or food ingredient by the addition of at least one LC-PUFA, **characterized in that** a composition as claimed in any one of claims 1 to 10 is added to the food or food ingredient.

12. A method according to claim 11, wherein the food or food ingredient is for human consumption.

13. A food or food ingredient, the nutritional value of which has been increased by the addition of at least one LC-PUFA, **characterized in that** it comprises a powder composition according to any one of claims 1 to 10.

**Patentansprüche**

1. Pulverzusammensetzung mit mittleren Teilchendurchmessern von etwa 50 bis 500 Mikrometer, umfassend Tröpfchen, die wenigstens eine langkettige (LC), mehrfach ungesättigte Fettsäure (PUFA) enthalten, die in eine Matrix aus Stärke eingebettet ist, die mit hydrophoben Einheiten modifiziert worden ist, und wobei die Teilchen durch einen Oberflächenölgehalt von weniger als 0,5 % (Gew./Gew.) **gekennzeichnet** sind.

2. Zusammensetzung gemäß Anspruch 1, wobei die Teilchen einen mittleren Durchmesser von etwa 50 bis 150 Mikrometer aufweisen.

3. Zusammensetzung gemäß Anspruch 1 oder Anspruch 2, wobei die modifizierte Stärke folgende Formel aufweist,

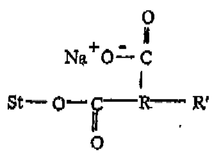

I

wobei St eine Stärke ist, R ein Alkylenrest ist und R' ein hydrophober Rest ist.

4. Zusammensetzung gemäß einem der Ansprüche 1 bis 3, wobei die modifizierte Stärke Stärkenatriumoctenylsuccinat ist.

5. Zusammensetzung gemäß einem der Ansprüche 1 bis 4, wobei die LC-PUFA vom n-3- und/oder vom n-6-Typ ist.

6. Zusammensetzung gemäß Anspruch 5, wobei die LC-PUFA ein Gemisch aus EPA, DPA und DHA in der Form ihrer Triglyceride ist.

7. Zusammensetzung gemäß Anspruch 6, wobei das LC-PUFA-Gemisch in der Form von Konzentraten, die aus Seetierölen erhalten sind, vorliegt.

8. Zusammensetzung gemäß einem der Ansprüche 5 bis 7, wobei die LC-PUFA in stabilisierter und/oder desodorierter Form vorliegt.

9. Zusammensetzung gemäß einem der Ansprüche 5 bis 8, wobei die LC-PUFA mit α-Tocopherol stabilisiert ist.

**10.** Zusammensetzung gemäß Anspruch 9, wobei die LC-PUFA mit α-Tocopherol oder einem Gemisch von Tocopherolen zusammen mit anderen Antioxidationsmitteln und/oder Desodorierungsmitteln stabilisiert ist.

**11.** Verfahren zum Erhöhen des Nährwerts eines Nahrungsmittels oder Nahrungsmittelbestandteils durch Zugeben von wenigstens einer LC-PUFA, **dadurch gekennzeichnet, dass** eine wie in einem der Ansprüche 1 bis 10 beanspruchte Zusammensetzung zu dem Nahrungsmittel oder Nahrungsmittelbestandteil zugegeben wird.

**12.** Verfahren gemäß Anspruch 11, wobei das Nahrungsmittel oder der Nahrungsmittelbestandteil für den menschlichen Verbrauch ist.

**13.** Nahrungsmittel oder Nahrungsmittelbestandteil, dessen Nährwert durch die Zugabe von wenigstens einer LC-PUFA erhöht worden ist, **dadurch gekennzeichnet, dass** es/er eine Pulverzusammensetzung gemäß einem der Ansprüche 1 bis 10 umfasst.

## Revendications

**1.** Composition en poudre ayant des diamètres moyens de particules d'environ 50 à 500 microns qui comprend des gouttelettes contenant au moins un acide gras polyinsaturé (PUFA) à chaîne longue (LC) enfoui dans une matrice d'un amidon qui a été modifié avec des motifs hydrophobes et où les particules sont **caractérisées par** une teneur en huile superficielle inférieure à 0,5 % (p/p).

**2.** Composition selon la revendication 1, **caractérisée en ce que** les particules ont un diamètre moyen d'environ 50 à 150 microns.

**3.** Composition selon la revendication 1 ou la revendication 2, **caractérisée en ce que** l'amidon modifié est de formule

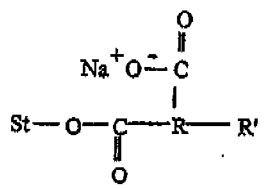

I

dans laquelle St est un amidon, R est un groupement alkylène et R' est un groupement hydrophobe.

**4.** Composition selon l'une quelconque des revendications 1 à 3, **caractérisée en ce que** l'amidon modifié est l'octénylsuccinate d'amidon sodique.

**5.** Composition selon l'une quelconque des revendications 1 à 4, **caractérisée en ce que** le LC-PUFA est de type n-3 et/ou n-6.

**6.** Composition selon la revendication 5, **caractérisée en ce que** le LC-PUFA est un mélange d'EPA, DPA et DHA sous forme de leurs triglycérides.

**7.** Composition selon la revendication 6, **caractérisée en ce que** le mélange de LC-PUFA est sous forme de concentrés obtenus à partir d'huiles marines.

**8.** Composition selon l'une quelconque des revendications 5 à 7, **caractérisée en ce que** le LC-PUFA est sous forme stabilisée et/ou désodorisée.

**9.** Composition selon l'une quelconque des revendications 5 à 8, **caractérisée en ce que** le LC-PUFA est stabilisé avec du α-tocophérol.

**10.** Composition selon la revendication 9, **caractérisée en ce que** le LC-PUFA est stabilisé avec du α-tocophérol ou un mélange de tocophérols conjointement avec d'autres antioxydants et/ou désodorisants.

11. Méthode d'augmentation de la valeur nutritionnelle d'un aliment ou d'un ingrédient alimentaire par l'addition d'au moins un LC-PUFA, **caractérisée en ce qu'**une composition selon l'une quelconque des revendications 1 à 10 est ajoutée à l'aliment ou à l'ingrédient alimentaire.

12. Méthode selon la revendication 11, **caractérisée en ce que** l'aliment ou l'ingrédient alimentaire est destiné à la consommation humaine.

13. Aliment ou ingrédient alimentaire, dont la valeur nutritionnelle a été augmentée par l'addition d'au moins un LC-PUFA, **caractérisé en ce qu'**il comprend une composition en poudre selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4670247 A
- US P6444227 B
- EP 0972513 A1


### Non-patent literature cited in the description


- Modified Starches: Properties and Uses. CRC Press, Inc, 1991